# EUROPEAN PATENT APPLICATION

(11) **EP 4 733 265 A1**
(43) Date of publication of application: **29.04.2026**
(21) Application number: 25206177.5
(22) Date of filing: 01.10.2025
(51) Int. Cl.: C01G 53/42, C01G 53/506, H01M 4/00

(54) **POSITIVE ELECTRODE ACTIVE MATERIALS, POSITIVE ELECTRODES, AND RECHARGEABLE LITHIUM BATTERIES**

(30) Priority: 15.10.2024 KR 20240140559; 30.09.2025 KR 20250142778
(71) Applicant: SAMSUNG SDI CO., LTD., Yongin-si, Gyeonggi-do 17084 (KR)
(72) Inventor: CHAE, Youngjoo, Yongin-si, Gyeonggi-do 17084 (KR)
(74) Representative: Marks & Clerk LLP

(57) **Abstract**

A positive electrode active material includes a first positive electrode active material having an average particle diameter (D₅₀) in a range of 11 µm to 20 µm and in a form of secondary particles in which a plurality of primary particles are agglomerated; a second positive electrode active material having D₅₀ in a range of 5 µm to 10 µm and in a form of secondary particles in which a plurality of primary particles are agglomerated; and a third positive electrode active material having D₅₀ in a range of 1 µm to 7 µm and in a form of single particles; wherein the third positive electrode active material is in an amount in a range of 5 wt% to 20 wt% based on 100 wt% of the first positive electrode active material, the second positive electrode active material, and the third positive electrode active material.

## Description

### BACKGROUND

### 1. Field

One or more embodiments of the present disclosure relate to positive electrode active materials, positive electrodes including such positive electrode active materials, and rechargeable lithium batteries including such positive electrodes.

### 2. Description of the Related Art

Portable information devices, such as a cell phone, a laptop, a smart phone, and/or the like, and/or electric vehicles, utilize rechargeable lithium batteries (e.g., as driving power sources) due to their high energy density and easy portability. Recently, there has been active research into utilizing rechargeable lithium batteries with high energy density as power driving sources for hybrid and electric vehicles, as well as power storage sources for energy storage systems.

Various positive electrode active materials have been investigated for utilization in (to realize) rechargeable lithium batteries for such applications. Among them, lithium nickel-based oxides, lithium nickel manganese cobalt composite oxides, lithium nickel cobalt aluminium composite oxides, and lithium cobalt oxides are mainly or predominantly utilized as positive electrode active materials. With the rapidly increasing demand for large-sized, high-capacity, and/or high-energy-density rechargeable lithium batteries, there is a growing need or desire to develop positive electrode active materials that concurrently (e.g., simultaneously) enhance or improve both (e.g., simultaneously) stability and performance.

### SUMMARY

One or more aspects of embodiments of the present disclosure are directed toward are a positive electrode active material capable of realizing high density, high capacity (e.g., high initial charge/discharge capacity), and long cycle-life characteristics, and a positive electrode and a rechargeable lithium battery utilizing the positive electrode active material.

Additional aspects of embodiments will be set forth in part in the description which follows and, in part, will be apparent from the description or may be learned by practice of the presented embodiments of the disclosure.

In one or more embodiments, a positive electrode active material includes: a first positive electrode active material having an average particle diameter (D₅₀) in a range of about 11 µm to about 20 µm and in a form of secondary particles in which a plurality of primary particles are agglomerated; a second positive electrode active material having an average particle diameter (D₅₀) in a range of about 5 µm to about 10 µm and in a form of secondary particles in which a plurality of primary particles are agglomerated; and a third positive electrode active material having an average particle diameter (D₅₀) in a range of about 1 µm to about 7 µm and in a form of single particles (e.g., each being a monolithic particle, not in a secondary particle shape or form, e.g., in the form of single (e.g., non-agglomerated) particles); wherein the third positive electrode active material is in an amount in a range of about 5 wt% to about 20 wt% based on 100 wt% of the first positive electrode active material, the second positive electrode active material, and the third positive electrode active material.

In one or more embodiments, a positive electrode includes: a current collector; and a positive electrode active material layer on the current collector; wherein the positive electrode active material layer includes the positive electrode active material as described in one or more embodiments.

In one or more embodiments, a rechargeable lithium battery includes: the positive electrode as described in one or more embodiments; a negative electrode; and an electrolyte.

At least some of the above and other features of the invention are set out in the claims.

The positive electrode active material according to one or more embodiments may maximize or enhance capacity (e.g., high initial charge/discharge capacity) while minimizing or reducing production cost, thereby ensuring long-life characteristics and improving or enhancing high-voltage characteristics and high-temperature storage characteristics. A rechargeable lithium battery utilizing the positive electrode active material as described in one or more embodiments may exhibit high initial charge/discharge capacity and efficiency even under high-voltage driving conditions, may realize high energy density due to high pellet density, and may realize long cycle-life characteristics.

For example, they may be achieved by enhancing the particle size distribution and morphology of the constituent active materials. For example, the combination of (i) a first positive electrode active material with relatively large secondary particles, (ii) a second positive electrode active material with intermediate-sized secondary particles, and (iii) a third positive electrode active material including fine, single (monolithic) particles, enables a more densely packed electrode structure. This configuration or arrangement may improve or enhance tap density and electrode packing density, thereby contributing to higher volumetric energy density. Furthermore, the inclusion of the third positive electrode active material in an amount ranging from about 5 wt% to about 20 wt% allows for enhanced interparticle contact and improved or enhanced lithium-ion diffusion pathways, which may lead to higher initial charge/discharge capacity and improved or enhanced rate capability. The enhanced particle size gradation also contributes to mechanical stability during repeated charge/discharge cycles, reducing the likelihood of electrode degradation and capacity fading. As a result, a rechargeable lithium battery incorporating the positive electrode active material as described herein may exhibit superior high-voltage performance, enhanced thermal stability, and extended cycle life.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

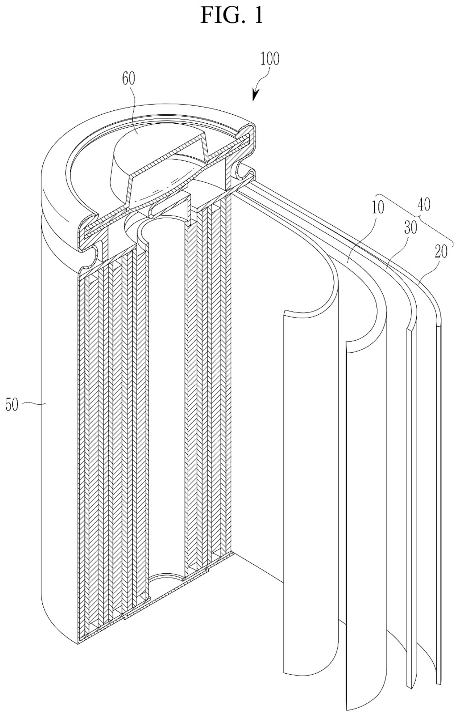

FIGS. 1-4 each is a schematic view illustrating rechargeable lithium batteries according to one or more embodiments.

### DETAILED DESCRIPTION

The subject matter of the present disclosure will be described more fully hereinafter with reference to the accompanying drawings, in which embodiments of the present disclosure are shown. As those skilled in the art would realize, the described embodiments may be modified in one or more suitable different ways, all without departing from the scope of the present disclosure. The drawings and description are to be regarded as illustrative in nature and not restrictive. Like reference numerals designate like elements throughout the attached drawings and the written description, and duplicative descriptions thereof may not be provided in the specification.

The terminology used herein is used to describe one or more embodiments of the present disclosure only and is not intended to limit the scope of the present disclosure.

The utilization of "may" if (e.g., when) describing embodiments of the present disclosure refers to "one or more embodiments of the present disclosure."

In the context of the present application and unless otherwise defined, the terms "use," "using," and "used" may be considered synonymous with the terms "utilize," "utilizing," and "utilized," respectively.

As used herein, the singular forms "a," "an," and "the" are intended to include the plural forms as well, unless the context clearly indicates otherwise. The singular expression includes the plural expression unless the context clearly dictates otherwise.

As used herein, the term "and/or" or "or" includes any and all combinations of one or more of the associated listed items. For example, "or" is not to be construed as an exclusive meaning, for example, "A or B" is construed to include A, B, A+B, and/or the like.

Throughout the present disclosure, the expressions, such as "at least one of," "one of," and "selected from," if (e.g., when) preceding a list of elements, modify the entire list of elements and do not modify the individual elements of the list. For example, "at least one of a, b, or c," "at least one selected from among a, b, and c," "at least one selected from among a to c," and/or the like indicates only a, only b, only c, both (e.g., simultaneously) a and b, both (e.g., simultaneously) a and c, both (e.g., simultaneously) b and c, all of a, b, and c, or variations thereof.

As utilized herein, the terms "substantially," "about," or similar terms are used as terms of approximation and not as terms of degree and are intended to account for the inherent deviations in measured or calculated values that would be recognized by those of ordinary skill in the art. "About" as used herein is inclusive of the stated value and refers to as being within an acceptable range of deviation for the particular value as determined by one of ordinary skill in the art, considering the measurement in question and the error associated with measurement of the particular quantity (e.g., the limitations of the measurement system). For example, "about" may refer to as being within one or more standard deviations or within ±30%, ±20%, ±10%, or ±5% of the stated value. Also, it should be understood that, even if (e.g., when) the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in the present disclosure is intended to include all higher numerical limitations subsumed therein.

As used herein, "combination thereof" refers to a mixture, a laminate, a composite, a copolymer, an alloy, a blend, a reaction product, and/or the like of the constituents.

Herein, it should be understood that the terms, such as "includes," "including," "has," or "having," are intended to designate the presence of an embodied feature, number, step (e.g., act or task), element, or a combination thereof, but it does not preclude the possibility of the presence or addition of one or more other features, numbers, steps (e.g., acts or tasks), elements, or a combination thereof. For example, it should be understood that the term "comprise(s)/comprising," "include(s)/including," or "have/has/having" specifies the presence of stated features, integers, steps (e.g., acts or tasks), operations, elements, and/or components, but do not preclude the presence or addition of one or more other features, integers, steps (e.g., acts or tasks), operations, elements, components, and/or groups thereof. Also, the terms "comprise(s)/comprising," "include(s)/including," "have/has/having," or similar terms include or support the terms "consisting of" and "consisting essentially of," indicating the presence of stated features, integers, steps (e.g., acts or tasks), operations, elements, and/or components, without or essentially without the presence of other features, integers, steps (e.g., acts or tasks), operations, elements, components, and/or groups thereof.

In the drawings, the thickness of layers, films, panels, regions, and/or the like may be exaggerated for clarity.

It will be understood that if (e.g., when) an element, such as a layer, a film, a region, or a substrate, is referred to as being "on" another element, it may be directly on the other element or intervening elements may also be present therebetween. In contrast, if (e.g., when) an element is referred to as being "directly on" another element, there are no intervening elements present therebetween.

The term "layer" herein includes not only a shape formed on the whole surface if (e.g., when) viewed from a plan view, but also a shape formed on a partial surface.

The average particle diameter may be measured by any suitable method that is generally available to or generally used by those skilled in the art, for example, by a particle size analyzer and/or by a transmission electron microscope (TEM) image and/or a scanning electron microscope (SEM) image. In one or more embodiments, it may be feasible to obtain an average particle diameter value by measuring using a dynamic light scattering (DLS) method, performing data analysis, counting the number of particles for each particle size range, and calculating from this data. Unless otherwise defined, the average particle diameter (D₅₀) may refer to the diameter of particles having a cumulative volume of 50 volume% in the particle size distribution. As used herein, if (e.g., when) a definition is not otherwise provided, the average particle diameter (D₅₀) refers to a diameter of particles having a cumulative volume of 50 volume% in the particle size distribution that is obtained by measuring the size (e.g., diameter or major axis length) of about 20 particles at random in a scanning electron microscope image. In one or more embodiments, dynamic light scattering (DLS) may be used, where particle counts within size ranges are analyzed to calculate the average particle diameter (D₅₀). Also, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D₅₀ value based on a 50% cumulative particle size distribution. Also, in the present disclosure, if (e.g., when) particles are substantially cylindrical or spherical, "diameter" refers to the average diameter of such particles. If (e.g., when) the particles are non-cylindrical or irregular in shape, "diameter" refers to the average major axis length of the particles.

"Metal" is interpreted as a concept including ordinary metals, transition metals, and metalloids (semi-metals).

### Positive Electrode Active Material

In one or more embodiments, a positive electrode active material includes a first positive electrode active material having an average particle diameter (D₅₀) in a range of about 11 µm to about 20 µm and in a form of secondary particles in which a plurality of primary particles are agglomerated; a second positive electrode active material having an average particle diameter (D₅₀) in a range of about 5 µm to about 10 µm and in a form of secondary particles in which a plurality of primary particles are agglomerated; and a third positive electrode active material having an average particle diameter (D₅₀) in a range of about 1 µm to about 7 µm and in a form of single particles (e.g., each being a monolithic particle, not in a secondary particle shape or form, e.g., in the form of single (e.g., non-agglomerated) particles); wherein the third positive electrode active material is in an amount in a range of about 5 wt% to about 20 wt% based on 100 wt% of the first positive electrode active material, the second positive electrode active material, and the third positive electrode active material.

Based on 100 wt% of the first positive electrode active material, the second positive electrode active material, and the third positive electrode active material, the first positive electrode active material may be in an amount in a range of about 60 wt% to about 90 wt%, for example, about 63 wt% to about 90 wt%, about 67 wt% to about 90 wt%, about 67 wt% to about 85 wt%, about 67 wt% to about 80 wt%, about 70 wt% to about 85 wt%, or about 70 wt% to about 80 wt%. In one or more embodiments, based on 100 wt% of the first positive electrode active material, the second positive electrode active material, and the third positive electrode active material, the second positive electrode active material may be in an amount in a range of about 5 wt% to about 30 wt%, for example, about 5 wt% to about 25 wt% or about 10 wt% to about 25 wt%. In one or more embodiments, based on 100 wt% of the first positive electrode active material, the second positive electrode active material, and the third positive electrode active material, the third positive electrode active material is in an amount in a range of about 5 wt% to about 20 wt%, for example, about 5 wt% to about 15 wt% or about 7 wt% to about 13 wt%. If (e.g., when) mixed in the foregoing ratio, the positive electrode active material may have low powder resistance, good or suitable powder flowability, and a low frictional force even at high rotational force, so that (e.g., such that) excellent or suitable processability may be realized, and the positive electrode may have high density because of excellent or suitable compressibility. The positive electrode active material may realize high capacity (e.g., high initial charge/discharge capacity) while maximizing or increasing energy density.

### Lithium Nickel-based Composite Oxide

In a positive electrode containing a lithium nickel-based positive electrode active material, a design of mixing large particles in the form of secondary particles and small particles in the form of single particles to maximize or increase capacity (e.g., high initial charge/discharge capacity) and energy density and thus implement long cycle-life characteristics has been proposed. The positive electrode may be in general manufactured by applying and drying a positive electrode composition containing a positive electrode active material on a current collector and then, drying and pressing it. The positive electrode including the large particles in the form of secondary particles and the small particles in the form of single particles may have problems that the large particles in the form of secondary particles are broken, cracked, or damaged on the surface in its upper portion contacting with a roller or a rolling plate during the rolling process. Accordingly, the deterioration of the large particles in the upper portion may be accelerated as batteries are repeatedly charged and discharged, resulting in deteriorating cycle-life characteristics. Therefore, one or more embodiments of the present disclosure propose a design of including middle particles in the form of secondary particles, which are smaller than the large particles but larger than the small particles in the form of single particles, improving or optimizing each amount of the large particles, the middle particles, and the small particles to improve or enhance powder flowability and prevent the deterioration of the large particles (or reduce a degree or occurrence of the deterioration of the large particles) and thereby maintain high capacity (e.g., high initial charge/discharge capacity) and energy density.

The first positive electrode active material, the second positive electrode active material, and the third positive electrode active material may each independently include a lithium nickel-based composite oxide, and the lithium nickel-based composite oxide of the first positive electrode active material, the lithium nickel-based composite oxide of the second positive electrode active material, and the lithium nickel-based composite oxide of the third positive electrode active material may be substantially the same as or different from each other and may each independently be represented by Chemical Formula 1.

**Chemical Formula 1** Liₐ₁Niₓ₁M¹_{y1}M²_{z1}O_{2-b1}X_{b1}

In Chemical Formula 1, 0.9≤a1≤1.8, 0.3≤x1 ≤ 1, 0≤y1 ≤0.7, 0≤z1 ≤0.7, 0.9≤x1+y1+z1≤1.1, and 0≤b1≤0.1, M¹ and M² may each independently be one element selected from among aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), tin (Sn), strontium (Sr), titanium (Ti), vanadium (V), tungsten (W), yttrium (Y), zinc (Zn), and zirconium (Zr), and M¹ and M² may be different elements from each other, and X may be one element selected from among fluorine (F), phosphorus (P), and sulfur (S).

In Chemical Formula 1, for example, 0.6≤x1 ≤1, 0≤y1≤0.4, and 0≤z1 ≤ 0.4; 0.8 ≤x1 ≤ 1, 0≤y1≤ 0.2, and 0 ≤ z1 ≤ 0.2; or 0.9 ≤ x1<1, 0<y1≤ 0.1, and 0 ≤ z1 ≤ 0.1.

In the lithium nickel-based composite oxide, based on 100 mol% of metal excluding (e.g., not including) lithium, a nickel content (e.g., amount) (e.g., the nickel content, based on 100 mol% of the total metal content excluding lithium) may be greater than or equal to about 60 mol%, for example, in a range of about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%. If (e.g., when) the nickel content (e.g., amount) satisfies the foregoing range, high capacity (e.g., high initial charge/discharge capacity) may be achieved and structural stability may be improved or enhanced even if (e.g., when) the cobalt content (e.g., amount) is reduced.

### First Positive Electrode Active Material

In one or more embodiments, the first positive electrode active material may include the lithium nickel-based composite oxide and is in a form of secondary particles in which a plurality of primary particles are agglomerated. Herein, the secondary particles may be spherical (e.g., substantially spherical), ellipsoidal (e.g., substantially ellipsoidal), polyhedral (e.g., substantially polyhedral), or irregularly shaped, and the primary particles may be spherical (e.g., substantially spherical), ellipsoidal (e.g., substantially ellipsoidal), plate (e.g., substantially plate)-shaped, or a (e.g., any suitable) combination thereof.

The average particle diameter (D₅₀) of the first positive electrode active material is in a range of about 11 µm to about 20 µm, for example, about 12 µm to about 19 µm or about 12 µm to about 18 µm. In one or more embodiments, in the first positive electrode active material, the average particle diameter (D₅₀) of the primary particles constituting the secondary particles may be less than or equal to about 1 µm, for example, in a range of about 100 nm to about 1 µm, about 100 nm to about 900 nm, about 200 nm to about 800 nm, or about 300 nm to about 700 nm. The average particle diameter of the primary particles may be obtained by randomly measuring the size (e.g., diameter or major axis length) of about 20 primary particles from a scanning electron microscope image or a transmission electron microscope image of the surface of the secondary particles to obtain a particle size distribution, and taking the size of particles having a cumulative volume of 50 volume% from the particle size distribution as the average particle diameter. If (e.g., when) the size of the primary particles satisfies the foregoing range, the first positive electrode active material may realize high initial charge/discharge capacity and efficiency and excellent or suitable output characteristics and cycle-life characteristics.

### Second Positive Electrode Active Material

In one or more embodiments, the second positive electrode active material may include the lithium nickel-based composite oxide, has a smaller average particle diameter (D₅₀) than the first positive electrode active material, and is in a form of secondary particles in which a plurality of primary particles are agglomerated. Herein, the secondary particles may be spherical (e.g., substantially spherical), ellipsoidal (e.g., substantially ellipsoidal), polyhedral (e.g., substantially polyhedral), or irregularly shaped, and the primary particles may be spherical (e.g., substantially spherical), ellipsoidal (e.g., substantially ellipsoidal), plate (e.g., substantially plate)-shaped, or a (e.g., any suitable) combination thereof.

The average particle diameter (D₅₀) of the second positive electrode active material is in a range of about 5 µm to about 10 µm, for example, about 5.5 µm to about 9.5 µm or about 6 µm to about 9 µm. In one or more embodiments, in the second positive electrode active material, the average particle diameter (D₅₀) of the primary particles constituting the secondary particles may be less than or equal to about 1 µm, for example, in a range of about 100 nm to about 1 µm, about 100 nm to about 900 nm, about 200 nm to about 800 nm, or about 300 nm to about 700 nm. The average particle diameter of the primary particles may be obtained by randomly measuring the size (e.g., diameter or major axis length) of about 20 primary particles from a scanning electron microscope image or a transmission electron microscope image of the surface of the secondary particles to obtain a particle size distribution, and taking the size of particles having a cumulative volume of 50 volume% from the particle size distribution as the average particle diameter. If (e.g., when) the size of the primary particles satisfies the foregoing range, the second positive electrode active material may realize high initial charge/discharge capacity and efficiency and excellent or suitable output characteristics and cycle-life characteristics.

### Third Positive Electrode Active Material

In one or more embodiments, the third positive electrode active material may include the lithium nickel-based composite oxide, has a smaller average particle diameter (D₅₀) than the second positive electrode active material, and is in a form of single particles. Herein, the single particle may be spherical (e.g., substantially spherical), elliptical (e.g., substantially elliptical), plate (e.g., substantially plate)-shaped, irregularly shaped, or a (e.g., any suitable) combination thereof.

The single particles may exist alone without a grain boundary within the particle, may be (each be) composed of one particle, and may be a single particle (e.g., a monolithic particle, not in a secondary particle shape or form), a monolith structure, a one body structure, or a non-agglomerated particle, in which particles are not agglomerated with each other but exist as an independent phase in terms of morphology, and may be expressed as a single particle (one body particle, single grain; e.g., a monolithic particle, not in a secondary particle shape or form), for example, as a single crystal. The single particles may exist alone, or single particles may be attached together. For example, 2 to 10 single particles may be attached and in contact with each other.

An average particle diameter (D₅₀) of the third positive electrode active material is in a range of about 1 µm to about 7 µm, for example, about 1 µm to about 5 µm or about 1 µm to about 3 µm. The average particle diameter (D₅₀) refers to a diameter of particles having a cumulative volume of 50 volume% in the particle size distribution that is obtained by measuring the size (e.g., diameter or major axis length) of about 20 particles at random in a scanning electron microscope image for positive electrode active materials.

The positive electrode active material according to one or more embodiments may realize a high pellet density. For example, the pellet density of the positive electrode active material may be in a range of about 3.3 g/cc to about 4.0 g/cc, for example, about 3.4 g/cc to about 3.9 g/cc, about 3.5 g/cc to about 3.9 g/cc, about 3.5 g/cc to about 3.8 g/cc, or about 3.5 g/cc to about 3.7 g/cc. A rechargeable lithium battery utilizing the positive electrode active materials may achieve high energy density. The pellet density may be measured, for example, by placing 3 g of a sample into a mold (area: 1.298 cm²), fitting a mold bar into the mold body, placing the mold set into a hydraulic press, and pressing at a pressure of 4 tons (metric ton) for 30 seconds to pelletize it.

### Positive Electrode

In one or more embodiments, a positive electrode includes a current collector and a positive electrode active material layer on the current collector, wherein the positive electrode active material layer includes the positive electrode active material as described in one or more embodiments. The positive electrode active material layer may further include other types (kinds) of positive electrode active materials in addition to the positive electrode active material as described in one or more embodiments. In one or more embodiments, the positive electrode active material layer may optionally further include a binder, a conductive (e.g., electrically conductive) material (e.g., conductor), or a (e.g., any suitable) combination thereof.

According to one or more embodiments, a loading level of the positive electrode active material layer may be about 10 mg/cm² to about 40 mg/cm², for example, about 10 mg/cm² to about 30 mg/cm² or about 10 mg/cm² to about 20 mg/cm². In one or more embodiments, a mixture density of the positive electrode active material layer in the finally compressed positive electrode may be in a range of about 3.6 g/cc to about 4.0 g/cc, for example, about 3.7 g/cc to about 4.0 g/cc or about 3.78 g/cc to about 4.0 g/cc. If (e.g., when) applying a positive electrode active material according to one or more embodiments, it may be advantageous or beneficial to implement the loading level and the mixture density, and a positive electrode satisfying the loading level and the mixture density in the foregoing range may be suitable to implement a high-capacity (e.g., high initial charge/discharge capacity), high-energy-density rechargeable lithium battery.

### Binder

The binder may improve or enhance binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but embodiments of the present disclosure are not limited thereto.

### Conductive Material

The conductive material may provide electrode conductivity (e.g., electrical conductivity), and any suitable electrically conductive material may be utilized as a conductive (e.g., electrically conductive) material unless it causes a chemical change (e.g., an undesirable chemical change). Examples of the conductive material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as a polyphenylene derivative; or a (e.g., any suitable) mixture thereof.

Each amount of the binder and the conductive material may be in a range of about 0.5 wt% to about 5 wt%, based on 100 wt% of the positive electrode active material layer.

The positive electrode current collector may include Al foil, but embodiments of the present disclosure are not limited thereto.

### Rechargeable Lithium Battery

One or more embodiments of the present disclosure provide a rechargeable lithium battery including the positive electrode as described in one or more embodiments, a negative electrode, and an electrolyte. As an example, the rechargeable lithium battery may include a positive electrode, a negative electrode, a separator arranged between the positive electrode and the negative electrode, and an electrolyte solution.

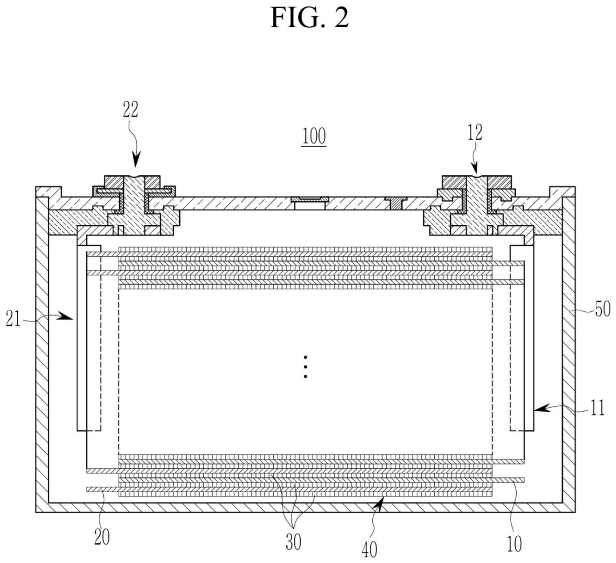

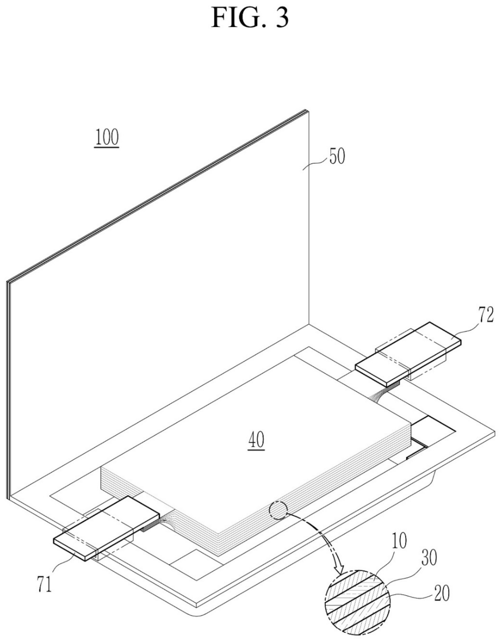

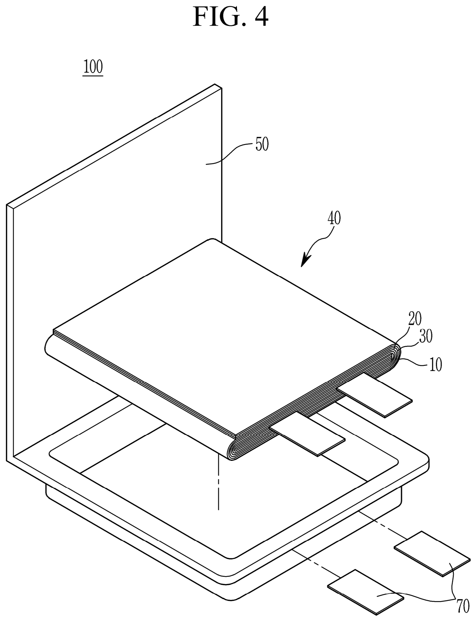

The rechargeable lithium batteries may be classified into cylindrical, prismatic, pouch, coin, and/or the like depending on the shape. FIGS. 1 to 4 each is a schematic view illustrating the rechargeable lithium batteries according to one or more embodiments, where FIG. 1 is a cylindrical battery, FIG. 2 is a prismatic battery, and FIGS. 3 and 4 are a pouch-shaped battery. Referring to FIGS. 1 to 4, a rechargeable lithium battery 100 may include an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as illustrated in FIG. 1. In one or more embodiments, in FIG. 2, the rechargeable lithium battery 100 may include a positive electrode lead tab 11, a positive electrode terminal 12, a negative electrode lead tab 21, and a negative electrode terminal 22. As illustrated in FIGS. 3 and 4, the rechargeable lithium battery 100 may include an electrode tab 70, for example, a positive electrode tab 71 and a negative electrode tab 72 serving as an electrical path to induce the current formed in the electrode assembly 40 to the outside.

### Negative Electrode

The negative electrode may include a current collector and a negative electrode active material layer on the current collector and may further include a negative electrode active material, a binder, a conductive (e.g., electrically conductive) material (e.g., conductor), or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous (e.g., non-crystalline) carbon, or a (e.g., any suitable) combination thereof as a carbon-based negative electrode active material. The crystalline carbon may be irregular, or sheet (e.g., substantially sheet), flake (e.g., substantially flake), spherical (e.g., substantially spherical), or fiber (e.g., substantially fiber) shaped (e.g., in a form of fibers) natural graphite and/or artificial graphite. The amorphous carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material and/or a Sn-based negative electrode active material. The Si-based negative electrode active material may include silicon, a silicon-carbon composite, SiOₓ (wherein 0 < x ≤ 2; e.g., SiO₂), a Si-Q alloy (wherein Q is an element selected from among an alkali metal, an alkaline-earth metal, a Group 13 element, a Group 14 element (excluding (e.g., not including) Si), a Group 15 element, a Group 16 element, a transition metal, a rare earth element, and a (e.g., any suitable) combination thereof, for example, Mg, Ca, Sr, Ba, Ra, scandium (Sc), yttrium (Y), Ti, Zr, hafnium (Hf), rutherfordium (Rf), V, Nb, tantalum (Ta), dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, thallium (TI), Ge, P, arsenic (As), Sb, bismuth (Bi), S, selenium (Se), tellurium (Te), polonium (Po), and a (e.g., any suitable) combination thereof), or a (e.g., any suitable) combination thereof. The Sn-based negative electrode active material may be Sn, SnOₖ (wherein 0 < k ≤ 2; e.g., SnO₂), a Sn alloy, or a (e.g., any suitable) combination thereof.

The silicon-carbon composite may be a composite of silicon and amorphous (e.g., non-crystalline) carbon. An average particle diameter (D₅₀) of the silicon-carbon composite particles may be, for example, in a range of about 0.5 µm to about 20 µm. According to one or more embodiments, the silicon-carbon composite may be in the form of silicon particles and amorphous (e.g., non-crystalline) carbon coated on the surface of the silicon particles. For example, it may include a secondary particle (core) in which silicon primary particles are assembled and an amorphous (e.g., non-crystalline) carbon coating layer (shell) on the surface of the secondary particle. The amorphous carbon may also be present between the silicon primary particles, for example, the silicon primary particles may be coated with amorphous (e.g., non-crystalline) carbon. The secondary particles may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on the surface of the core. The crystalline carbon may be artificial graphite, natural graphite, or a (e.g., any suitable) combination thereof. The amorphous carbon may include soft carbon, hard carbon, a mesophase pitch carbonized product, and/or calcined coke.

If (e.g., when) the silicon-carbon composite includes silicon and amorphous (e.g., non-crystalline) carbon, an amount of silicon may be in a range of about 10 wt% to about 50 wt% and an amount of amorphous (e.g., non-crystalline) carbon may be in a range of about 50 wt% to about 90 wt% based on 100 wt% of the silicon-carbon composite. In one or more embodiments, if (e.g., when) the composite includes silicon, amorphous (e.g., non-crystalline) carbon, and crystalline carbon, an amount of silicon may be in a range of about 10 wt% to about 50 wt%, an amount of crystalline carbon may be in a range of about 10 wt% to about 70 wt%, and an amount of amorphous (e.g., non-crystalline) carbon may be in a range of about 20 wt% to about 40 wt% based on 100 wt% of the silicon-carbon composite.

In one or more embodiments, a thickness of the amorphous carbon coating layer may be in a range of about 5 nm to about 100 nm. An average particle diameter (D₅₀) of the silicon particles (primary particles) may be in a range of about 10 nm to about 1 µm or about 10 nm to about 200 nm. The silicon particles may exist as silicon alone, in the form of a silicon alloy, or in an oxidized form. The oxidized form of silicon may be represented by SiOₓ (wherein 0 < x ≤ 2; e.g., SiO₂). At this time, the atomic content (e.g., amount) ratio of Si:O, which indicates a degree of oxidation, may be in a range of about 99:1 to about 33:67. As used herein, if (e.g., when) a definition is not otherwise provided, an average particle diameter (D₅₀) indicates a particle where a cumulative volume is about 50 volume% in a particle size distribution.

The Si-based negative electrode active material or the Sn-based negative electrode active material may be mixed with the carbon-based negative electrode active material. If (e.g., when) the Si-based negative electrode active material or the Sn-based negative electrode active material and the carbon-based negative electrode active material are mixed and used, the mixing ratio may be a weight ratio in a range of about 1:99 to about 90:10.

### Binder

The binder may serve to well or suitably adhere the negative electrode active material particles to each other and also to adhere the negative electrode active material to the current collector. The binder may be a non-aqueous (e.g., water-insoluble) binder, an aqueous (e.g., water-soluble) binder, a dry binder, or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a (e.g., any suitable) combination thereof.

If (e.g., when) an aqueous (e.g., water-soluble) binder is used as the negative electrode binder, a cellulose-based compound capable of imparting or increasing viscosity may further be included. As the cellulose-based compound, one or more of carboxymethyl cellulose, hydroxypropyl methylcellulose, methyl cellulose, or alkali metal salts thereof may be mixed and used. The alkali metal may be Na, K, or lithium (Li).

The dry binder may be a polymer material capable of becoming a fiber, and may be, for example, polytetrafluoroethylene, polyvinylidene fluoride, a polyvinylidene fluoride-hexafluoropropylene copolymer, polyethylene oxide, or a (e.g., any suitable) combination thereof.

### Conductive Material

The conductive material may be included to provide electrode conductivity (e.g., electrical conductivity), and any suitable electrically conductive material may be utilized as a conductive (e.g., electrically conductive) material unless it causes a chemical change (e.g., an undesirable chemical change). Examples of the conductive material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as polyphenylene and/or a polyphenylene derivative; or a (e.g., any suitable) mixture thereof.

An amount of the negative electrode active material may be in a range of about 95 wt% to about 99.5 wt% based on 100 wt% of the negative electrode active material layer, and an amount of the binder may be in a range of about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, a sheet, or a foam. A thickness of the negative electrode current collector may be, for example, in a range of about 1 µm to about 20 µm, about 5 µm to about 15 µm, or about 7 µm to about 10 µm.

### Electrolyte

For example, the electrolyte for a rechargeable lithium battery may be an electrolyte solution, which may include a non-aqueous (e.g., water-insoluble) organic solvent and a lithium salt.

The non-aqueous organic solvent may serve as a medium to transmit ions taking part in the electrochemical reaction of a rechargeable lithium battery. The non-aqueous organic solvent may be a carbonate-based solvent, an ester-based solvent, an ether-based solvent, a ketone-based solvent, an alcohol-based solvent, or an aprotic solvent, or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R is a C2 to C20 linear, branched, or cyclic hydrocarbon group, a double bond, an aromatic ring, an ether bond, and/or the like); amides, such as dimethylformamide and/or the like; dioxolanes, such as 1,3-dioxolane, 1,4-dioxolane, and/or the like; sulfolanes, and/or the like.

The non-aqueous organic solvent may be used alone or in a mixture of two or more types (kinds), and if (e.g., when) two or more types (kinds) are used in a mixture, a mixing ratio may be appropriately or suitably adjusted according to the desired or suitable battery performance, which is generally available to those working in the field.

If (e.g., when) using a carbonate-based solvent, a cyclic carbonate and a chain carbonate may be mixed and used, and the cyclic carbonate and the chain carbonate may be mixed in a volume ratio in a range of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio in a range of about 1:1 to about 30:1.

The electrolyte solution may further include vinylethylene carbonate, vinylene carbonate, and/or an ethylene carbonate-based compound to improve or enhance battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and/or the like.

The lithium salt dissolved in the organic solvent may be to supply lithium ions in a rechargeable lithium battery, enable a basic operation of a rechargeable lithium battery, and improve or enhance transportation of the lithium ions between the positive electrode and the negative electrode. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If (e.g., when) the concentration of lithium salt is within the foregoing range, the electrolyte solution may have appropriate or suitable ionic conductivity and viscosity, and thus excellent or suitable performance may be achieved and lithium ions may move effectively or suitably.

### Separator

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film, such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a (e.g., any suitable) combination thereof on one surface or both surfaces (e.g., two opposite (opposite facing) surfaces) of the porous substrate.

The porous substrate may be a polymer film formed or composed of any one polymer selected from among polyolefin, such as polyethylene and polypropylene, polyester, such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (PTFE; e.g., Teflon^{™}), or a copolymer or mixture of two or more thereof.

The porous substrate may have a thickness in a range of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide and a second structural unit including at least one selected from a structural unit derived from (meth)acrylic acid or (meth)acrylate and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a (e.g., any suitable) combination thereof, but embodiments of the present disclosure are not limited thereto. An average particle diameter (D₅₀) of the inorganic particles may be in a range of about 1 nm to about 2000 nm, for example, about 100 nm to about 1000 nm or about 100 nm to about 700 nm.

The organic material and the inorganic material may be mixed in one coating layer, or a coating layer including an organic material and a coating layer including an inorganic material may be stacked.

The thickness of the coating layer may be in a range of about 0.5 µm to about 20 µm, for example, about 1 µm to about 10 µm or about 1 µm to about 5 µm.

Examples and Comparative Examples of the present disclosure are described herein. However, the following examples are only examples of the present disclosure, and embodiments of the present disclosure are not limited to the following examples.

### Examples

### Example 1

### 1. Preparation of Positive Electrode Active Material

### (1) Preparation of First Positive Electrode Active Material

An aluminium precursor of Al₂(SO₄)₃(H₂O)₁₈ was mixed with NaOH, NH₄OH, and water in a reactor to prepare an aluminium precursor aqueous solution.

Separately, a nickel precursor of NiSO₄(H₂O)₆ and a cobalt precursor of CoSO₄(H₂O)₇ were respectively mixed with water to prepare a nickel precursor aqueous solution and a cobalt precursor aqueous solution.

The aluminium precursor aqueous solution was added to the reactor, and the nickel precursor aqueous solution and the cobalt precursor aqueous solution were added thereto in a dropwise fashion to obtain a reaction mixture, which was stirred for 10 hours to 20 hours. In the reaction mixture, the amounts of the nickel precursor, the cobalt precursor, and the aluminium precursor were stoichiometrically controlled or selected to have a mole ratio of nickel: cobalt: aluminium = 91:8:1.

Subsequently, a sodium hydroxide aqueous solution was added to the reaction mixture in a dropwise fashion to adjust pH of the reaction mixture to in a range of 10 to 12. The obtained precipitates were filtered, washed, and vacuum-dried at 100 °C to prepare nickel-cobalt-aluminium hydroxide (Ni_{0.91}Co_{0.08}Al_{0.01}(OH)₂) powder.

The nickel-cobalt-aluminium hydroxide was mixed with lithium hydroxide (LiOH) in a mortar and then, placed in a furnace and heat-treated at 760 °C for 10 hours, while flowing O₂ thereinto, preparing a first positive electrode active material. The amounts of the nickel-cobalt-aluminium hydroxide and the hydroxide lithium were controlled or selected to have a ratio of metal excluding lithium: lithium = 1:1.05.

The first positive electrode active material prepared according to the method was Li_{1.05}Ni_{0.91}Co_{0.08}Al_{0.01}O₂ in the form of secondary particles having an average particle diameter (D₅₀) of about 14 µm, wherein primary particles forming the secondary particles had an average particle diameter (D₅₀) of about 500 nm.

### (2) Preparation of Second Positive Electrode Active Material

Ni_{0.91}Co_{0.08}Al_{0.01}(OH)₂ and LiOH were mixed in a mole ratio of 1:1.05 and then, primarily heat-treated at 750 °C for 10 hours under an oxygen atmosphere to prepare a second positive electrode active material with a composition of Li_{1.05}Ni_{0.91}Co_{0.08}Al_{0.01}O₂ in the form of secondary particles having an average particle diameter (D₅₀) of about 7 µm, wherein primary particles forming the secondary particles had an average particle diameter (D₅₀) of about 400 nm.

### (3) Preparation of Third Positive Electrode Active Material

Ni_{0.91}Co_{0.07}Mn_{0.02}(OH)₂ and LiOH were mixed in a mole ratio of 1:1.03 and then, heat-treated at 730 °C for 10 hours under an oxygen atmosphere. And then, the crushing process (jet mill with a bed weight of 300 kg, a rotation speed of the classifier wheel of 1740 rpm, a rotation speed of the blower of 3000 rpm, a pulse pressure of 0.5 bar, a gap pressure of 0.4 bar, and a G/A of 6.3 bar (processing 5 kg per minute)) was performed to prepare a third positive electrode active material with a composition of Li_{1.03}Ni_{0.91}Co_{0.07}Mn_{0.02}O₂ in the form of single particles having an average particle diameter (D₅₀) of about 3 µm.

### (4) Preparation of Positive Electrode Active Material

70 wt% of the first positive electrode active material, 20 wt% of the second positive electrode active material, and 10 wt% of the third positive electrode active material were mixed to prepare a positive electrode active material.

### 2. Manufacturing of Rechargeable Lithium Battery Cell

98.5 wt% of the prepared positive electrode active material, 1.0 wt% of a polyvinylidene fluoride binder, and 0.5 wt% of a carbon nanotube conductive (e.g., electrically conductive) material were mixed to prepare a positive electrode active material layer slurry, and the positive electrode active material layer slurry was coated on an aluminium foil current collector and then, dried and compressed to manufacture a positive electrode.

97.5 wt% of a graphite negative electrode active material, 1.5 wt% of carboxymethyl cellulose, and 1 wt% of a styrene butadiene rubber were mixed in a water solvent to prepare a negative electrode active material layer slurry. The negative electrode active material layer slurry was coated on a copper foil current collector and then, dried and pressed to manufacture a negative electrode.

A polytetrafluoroethylene separator and an electrolyte solution prepared by mixing ethylene carbonate and dimethyl carbonate in a volume ratio of 3:7 and dissolving 1 M LiPF₆ in the mixed solvent were used to manufacture a rechargeable lithium battery cell in a generally-used method.

### Examples 2 to 5

A positive electrode active material and a rechargeable lithium battery cell were manufactured in substantially the same manner as in Example 1 except that the first positive electrode active material, the second positive electrode active material, and the third positive electrode active material were mixed in a ratio (e.g., amount) as shown in Table 1 in preparing the positive electrode active material.

### Comparative Examples 1 to 5

A positive electrode active material and a rechargeable lithium battery cell were manufactured in substantially the same manner as in Example 1 except that the first positive electrode active material, the second positive electrode active material, and the third positive electrode active material were mixed in a ratio (e.g., amount) as shown in Table 1 in preparing the positive electrode active material.

### Evaluation Example 1: Pellet Density of Positive Electrode Active Material

The pellet density of the positive electrode active materials prepared according to Examples and Comparative Examples was measured, and the results are shown in Table 1. The positive electrode active material was weighed and taken by 3 g and then, put into a mold (an area: about 1.298 cm²), and a mold bar was slowly inserted into a mold body. After placing the mold set in a hydraulic press and then, pressing it with a pressure of about 4 tons (Metric ton) for about 30 seconds, its height was measured to obtain the pellet density.

### Evaluation Example 2: Mixture Density of Positive Electrode

The mixture density according to the compressive strength of the positive electrodes manufactured in Examples and Comparative Examples was measured, and the results are shown in Table 1. The mixture density of the positive electrode active material layer refers to the ratio of the weight to the volume of the pressed positive active material layer. The mixture density of the positive electrode active material layer can be measured by measuring a cross-sectional area, thickness and weight of the positive active material layer excluding the positive electrode current collector, calculating the volume by multiplying the cross-sectional area and the thickness, and dividing the weight by the volume.

**Table 1**

| | First positive electrode active material (wt%) | Second positive electrode actve material (wt%) | Third positive electrode active material (wt%) | Pellet density (g/cc) | Mixture density (g/cc) |
|---|---|---|---|---|---|
| Example 1 | 70 | 20 | 10 | 3.61 | 3.848 |
| Example 2 | 70 | 25 | 5 | 3.56 | 3.821 |
| Example 3 | 70 | 10 | 20 | 3.57 | 3.826 |
| Example 4 | 85 | 5 | 10 | 3.54 | 3.819 |
| Example 5 | 65 | 25 | 10 | 3.50 | 3.787 |
| Comparative Example 1 | 85 | 0 | 15 | 3.49 | 3.771 |
| Comparative Example 2 | 65 | 0 | 35 | 3.44 | 3.762 |
| Comparative Example 3 | 72 | 25 | 3 | 3.42 | 3.744 |
| Comparative Example 4 | 65 | 10 | 25 | 3.56 | 3.820 |
| Comparative Example 5 | 85 | 15 | 0 | 3.41 | 3.711 |

Referring to Table 1, Examples 1 to 5, which included all the first, second, and third positive electrode active materials, wherein 5 wt% to 20 wt% of the third positive electrode active material was included based on 100 wt% of the first, second, and third positive electrode active materials, compared with Comparative Examples 1 and 2 not including the second positive electrode active material, Comparative Examples 3 and 4 not including 5 wt% to 20 wt% of the third positive electrode active material based on 100 wt% of the first, second, and the third positive electrode active materials, and Comparative Example 5 not including the third positive electrode active material, exhibited excellent or suitable pellet density and mixture density. For example, Examples 1 to 4 including 70 wt% or more of the first positive electrode active material and 5 wt% to 20 wt% of the third positive electrode active material based on 100 wt% of the total of the first, second, and third positive electrode active materials were confirmed to exhibit more excellent or suitable pellet density and mixture density.

### Evaluation Example 3: Powder Resistance

The positive electrode active materials according to Examples and Comparative Examples were measured with respect to powder resistance, and the results are shown in Table 2.

The powder resistance was measured by placing 20 g of each of the positive electrode active materials in a beaker with a diameter/a height (10 cm/15 cm) and moving a blade with two circular stirring blades from top to bottom in a clockwise direction with a small torque to measure resistance to its powder flow. A pattern of the powder flow was read by initially moving the blade up and down, wherein a plenty of particles interacted one another and generated the resistance by the blade. Herein, the resistance to the powder flow was respectively measured at an initial rotation speed of 100 mm/s and at each reduced rotation speed of 70 mm/s, 40 mm/s, and 10 mm/s, and the results are shown in Table 2.

**Table 2**

| | First posi tive elect rode acti ve materi al (wt%) | Second positive electrode active m aterial (w t%) | Third po sitive ele ctrode ac tive mate rial (wt% ) | Total Energy (mJ) | | | |
|---|---|---|---|---|---|---|---|
| | | | | 100 mm/s | 70 m m/s | 40 m m/s | 10 m m/s |
| Example 1 | 70 | 20 | 10 | 1456 | 1619 | 1837 | 2383 |
| Example 2 | 70 | 25 | 5 | 1545 | 1717 | 1989 | 2542 |
| Example 3 | 70 | 10 | 20 | 1548 | 1782 | 2043 | 2609 |
| Example 4 | 85 | 5 | 10 | 1622 | 1856 | 2163 | 2812 |
| Example 5 | 65 | 25 | 10 | 1652 | 1865 | 2311 | 2917 |
| Comparative Example 1 | 85 | 0 | 15 | 1827 | 2149 | 2712 | 3722 |
| Comparative Example 2 | 65 | 0 | 35 | 2042 | 2452 | 2885 | 3954 |
| Comparative Example 3 | 72 | 25 | 3 | 1668 | 1914 | 2388 | 3197 |
| Comparative Example 4 | 65 | 10 | 25 | 1752 | 2037 | 2507 | 3311 |
| Comparative Example 5 | 85 | 15 | 0 | 1786 | 2087 | 2587 | 3412 |

Referring to Table 2, Examples 1 to 5 including all the first, second, and third positive electrode active materials and 5 wt% to 20 wt% of the third positive electrode active material based on 100 wt% of the first, second, and third positive electrode active materials, compared with Comparative Examples 1 and 2 not including the second positive electrode active material, Comparative Examples 3 and 4 not including 5 wt% to 20 wt% of the third positive electrode active material based on 100 wt% of the first, second, and third positive electrode active materials, and Comparative Example 5 not including the third positive electrode active material, exhibited less desired or required energy, when the speed was reduced from 100 mm/s to 10 mm/s, which confirmed excellent or suitable powder flowability.

### Evaluation Example 4: Initial Charge/Discharge Capacity and Efficiency

The rechargeable lithium battery cells according to Examples and Comparative Examples were charged to an upper limit voltage of 4.3 V at a constant current of 0.1 C and to 0.05 C at the constant voltage and discharged to a cut-off voltage of 3.0 V at 0.1 C at 25 °C for initial charge and discharge. Table 3 shows initial charge capacity (0.1 C charge), initial discharge capacity (0.1 C discharge), and a ratio of the former to the latter as efficiency.

**Table 3**

| | First positive electrode active material (wt%) | Second positive electrod e active material (wt%) | Third positive electrod e active material (wt%) | 0.1 C charge (mAh/g) | 0.1 C discharge (mAh/g) | Effici ency (%) |
|---|---|---|---|---|---|---|
| Example 1 | 70 | 20 | 10 | 245.8 | 216.6 | 88.1 |
| Example 2 | 70 | 25 | 5 | 245.3 | 216.2 | 88.1 |
| Example 3 | 70 | 10 | 20 | 245.5 | 216.4 | 88.1 |
| Example 4 | 85 | 5 | 10 | 245.3 | 216.1 | 88.1 |
| Example 5 | 65 | 25 | 10 | 245.1 | 215.8 | 88.0 |
| Comparative Example 1 | 85 | 0 | 15 | 244.5 | 215.0 | 87.9 |
| Comparative Example 2 | 65 | 0 | 35 | 244.7 | 215.2 | 87.8 |
| Comparative Example 3 | 72 | 25 | 3 | 245.3 | 215.9 | 87.9 |
| Comparative Example 4 | 65 | 10 | 25 | 245.2 | 215.6 | 87.8 |
| Comparative Example 5 | 85 | 15 | 0 | 245.1 | 215.5 | 87.8 |

Referring to Table 3, Examples 1 to 5 including all the first, second, and third positive electrode active materials, wherein 5 wt% to 20 wt% of the third positive electrode active material was included based on 100 wt% of the first, second, and third positive electrode active materials, Comparative Examples 1 and 2 not including the second positive electrode active material, Comparative Examples 3 and 4 not including 5 wt% to 20 wt% of the third positive electrode active material based on 100 wt% of the first, second, and third positive electrode active materials, and Comparative Example 5 not including the third positive electrode active material, were confirmed to exhibit excellent or suitable battery efficiency. For example, Examples 1 to 4, which included 5 wt% to 20 wt% of the third positive electrode active material and 70 wt% or more of the first positive electrode active material based on 100 wt% of the first, second, and third positive electrode active materials, were confirmed to exhibit much more excellent or suitable battery efficiency.

A battery manufacturing device, a battery management system (BMS) device, and/or any other relevant devices or components according to one or more embodiments of the present disclosure may be implemented utilizing any suitable hardware, firmware (e.g., an application-specific integrated circuit), software, and/or a (e.g., any suitable) combination of software, firmware, and hardware. For example, one or more suitable components of the device may be provided on one integrated circuit (IC) chip or on separate IC chips. Further, one or more suitable components of the device may be implemented on a flexible printed circuit film, a tape carrier package (TCP), a printed circuit board (PCB), and/or provided on one substrate. Further, the one or more suitable components of the device may be a process or thread, running on one or more processors, in one or more computing devices, executing computer program instructions and interacting with other system components to perform the one or more suitable functionalities described herein. The computer program instructions may be stored in a memory which may be implemented in a computing device utilizing a standard memory device, such as, for example, a random access memory (RAM). The computer program instructions may also be stored in other non-transitory computer readable media, such as, for example, a CD-ROM, a flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the one or more embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

While the subject matter of the present disclosure has been described in connection with what is presently considered to be practical embodiments, it is to be understood that the present disclosure is not limited to the disclosed embodiments. In contrast, it is intended to cover one or more suitable modifications and equivalent arrangements included within the scope of the appended claims and equivalents thereof. It therefore will be understood that one or more embodiments described herein are just illustrative but not limitative in all aspects.

### Reference Numerals

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material comprising:
a first positive electrode active material having an average particle diameter (D₅₀) in a range of 11 µm to 20 µm and in a form of secondary particles in which a plurality of primary particles are agglomerated;
a second positive electrode active material having an average particle diameter (D₅₀) in a range of 5 µm to 10 µm and in a form of secondary particles in which a plurality of primary particles are agglomerated; and
a third positive electrode active material having an average particle diameter (D₅₀) in a range of 1 µm to 7 µm and in a form of single particles;
wherein the third positive electrode active material is in an amount in a range of 5 wt% to 20 wt% based on 100 wt% of the first positive electrode active material, the second positive electrode active material, and the third positive electrode active material.

2. The positive electrode active material as claimed in claim 1, wherein,
based on 100 wt% of the first positive electrode active material,
the second positive electrode active material, and the third positive electrode active material, the first positive electrode active material is in an amount in a range of 60 wt% to 90 wt%.

3. The positive electrode active material as claimed in claim 1, wherein,
based on 100 wt% of the first positive electrode active material,
the second positive electrode active material, and the third positive electrode active material, the first positive electrode active material is in an amount in a range of 67 wt% to 90 wt%.

4. The positive electrode active material as claimed in claim 1, wherein,
based on 100 wt% of the first positive electrode active material,
the second positive electrode active material, and the third positive electrode active material, the first positive electrode active material is in an amount in a range of 67 wt% to 80 wt%.

5. The positive electrode active material as claimed in any one of claims 1 to 4, wherein,
based on 100 wt% of the first positive electrode active material, the second positive electrode active material, and the third positive electrode active material,
the second positive electrode active material is in an amount in a range of 5 wt% to 30 wt%.

6. The positive electrode active material as claimed in any one of claims 1 to 5, wherein
the first positive electrode active material, the second positive electrode active material, and the third positive electrode active material comprise each independently lithium nickel-based composite oxide.

7. The positive electrode active material as claimed in claim 6, wherein
the lithium nickel-based composite oxide is represented by Chemical Formula 1:
**Chemical Formula 1** Liₐ₁Niₓ₁M¹_{y1}M²_{z1}O_{2-b1}X_{b1}, and
wherein, in Chemical Formula 1, 0.9≤a1 ≤1.8, 0.3≤x1 ≤1, 0≤y1≤0.7, 0≤z1 ≤ 0.7, 0.9≤x1+y1+z1≤1.1, and 0≤b1≤0.1, M¹ and M² are each independently one element selected from among Al, B, Ba, Ca, Ce, Co, Cr, Cu, Fe, Mg, Mn, Mo, Nb, Si, Sn, Sr, Ti, V, W, Y, Zn, and Zr, and M¹ and M² are different elements from each other, and X is one element selected from among F, P, and S.

8. The positive electrode active material as claimed in claim 6 or claim 7, wherein,
in the lithium nickel-based composite oxide,
a nickel content based on 100 mol% of metal excluding lithium is in a range of 60 mol% to 80 mol%.

9. The positive electrode active material as claimed in any one of claims 1 to 8, wherein:
(i) in the first positive electrode active material,
an average particle diameter (D₅₀) of the primary particles constituting the secondary particles is less than or equal to 1 µm; and/or
(ii) in the second positive electrode active material,
an average particle diameter (D₅₀) of the primary particles constituting the secondary particles is less than or equal to 1 µm.

10. The positive electrode active material as claimed in any one of claims 1 to 9, wherein
a pellet density of the positive electrode active material is in a range of 3.5 g/cc to 3.7 g/cc.

11. A positive electrode comprising:
a current collector; and
a positive electrode active material layer on the current collector,
wherein the positive electrode active material layer comprises the positive electrode active material as claimed in any one of claims 1 to 10.

12. The positive electrode as claimed in claim 11, wherein:
(i) a mixture density of the positive electrode active material layer is in a range of 3.78 g/cc to 4.0 g/cc; and/or
(ii) a loading level of the positive electrode active material layer is in a range of 10 mg/cm² to 40 mg/cm².

13. The positive electrode as claimed in claim 11 or claim 12, wherein
the positive electrode active material layer further comprises at least one selected from among a binder, a conductive material, and combinations thereof, optionally wherein
the binder comprises at least one selected from among polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and combinations thereof.

14. The positive electrode as claimed in claim 13, wherein:
(i) the conductive material comprises at least one selected from among a carbon-based material, a metal-based material, a conductive polymer, and combinations thereof; and/or
(ii) an amount of each of the binder and the conductive material is in a range of 0.5 wt% to 5 wt% based on 100 wt% of the positive electrode active material layer.

15. A rechargeable lithium battery comprising:
the positive electrode as claimed in any one of claims 11 to 14;
a negative electrode; and
an electrolyte, optionally wherein
the negative electrode comprises a carbon-based negative electrode active material, a lithium metal, a lithium metal alloy, a silicon-based negative electrode active material, or a combination thereof.
